# EUROPEAN PATENT SPECIFICATION

(11) **EP 3 048 934 B1**
(45) Date of publication and mention of the grant of the patent: **09.08.2017**
(21) Application number: 13794971.5
(22) Date of filing: 27.09.2013
(51) Int. Cl.: A47G 7/04, A01G 9/02

(54) **FLOWERPORT COMPRISING ADJUSTABLE ARMS FOR COUPLING AND SUPPORTING TO RAILINGS, WALLS OR OTHER SUPPORTS**
BLUMENKASTEN MIT ANPASSBAREN HALTERN ZUM ANBRINGEN UND STÜTZEN AN GELÄNDERN, MAUERN ODER ANDEREN TRÄGERN
POT DE FLEUR AVEC BRAS AJUSTABLES POUR FIXATION ET SUPPORT AUX BALLUSTRADES, MURS OU D'AUTRES SUPPORTS

(43) Date of publication of application: 03.08.2016
(73) Proprietor: Bama S.p.A., 55011 Altopascio (LU) (IT)
(72) Inventor: BAIOCCHI, Renzo, I-55015 Montecarlo (IT)
(74) Representative: Scorza, Federica
(86) International application number: PCT/IB2013/002141
(87) International publication number: WO 2015/044700

(56) References cited:
- EP-A1- 0 518 193
- EP-A1- 1 060 697
- EP-A2- 1 198 984
- CH-A- 480 827

## Description

The present invention relates to a flowerpot comprising adjustable arms and independent, removable snap pins for coupling and supporting to railings, walls or other supports.

A flowerpot equipped with adjustable arms for coupling and supporting to railings, walls or other supports is described in the patent application N. IT2003FI0001120030115 published on 16-07-2004 and comprises coupling arms which are adjustable to adapt to the thickness of the support provided for supporting the flowerpot. Moreover the described flowerpot comprises a container provided with at least one retractable lower support able to contact the outer face of the support. Each coupling arm is perpendicular to the flowerpot, has a vertical branch to embrace the support and a horizontal branch perpendicular to the support, and is engageable in a linearly adjustable position inside a corresponding seat formed in the bottom portion of the edge of the flowerpot. The seats comprised in the bottom portion of the edge of the flowerpot present at least one or a series of snap pins downwards oriented and also some lower trough protrusions. The horizontal branch of each coupling arm form a plurality of through seats for these snap pins and for these lower protrusions in order to differently position the flowerpot depending on the thickness of the support provided. In addition a safety pin can be provided for being inserted inside the trough protrusions previously coupled with the corresponding trough seat of the coupling arm in order to better guarantee the locking and the safety of the support and for retaining against sliding.

The problem of the described flowerpot is that it is difficult to easily manage the adjustments of position of the flowerpot depending on the support thickness and to quickly uncouple the flowerpot from the support.

Aim of the present invention is to provide a flowerpot comprising adjustable arms and independent removable snap pins for coupling and supporting to railings, walls or other supports easy to disengage from the support and to manage the adjustments of position on the support.

According to the present invention, a flowerpot comprising adjustable arms and independent removable snap pins for coupling and supporting to railings, walls or other supports is realized, as defined in claim 1.

For a better understanding of the present invention a preferred embodiment is described, by way of non limitative example, referring to the accompanying drawings, in which:
- Figure 1 shows a first schematic three-dimensional view of an assembled flowerpot comprising adjustable arms and independent removable snap pins for coupling and supporting to railings, walls or other supports, according to the invention;
- Figures 2a-2b show schematic three-dimensional views of the assembly of the flowerpot comprising adjustable arms and independent removable snap pins for coupling and supporting to railings, walls or other supports, according to the invention;
- Figure 3 shows a schematic three-dimensional section view of the assembling of the flowerpot comprising adjustable arms and independent removable snap pins for coupling and supporting to railings, walls or other supports, according to the invention;
- Figure 4 shows a schematic three-dimensional zoomed section view of the assembling of the flowerpot comprising adjustable arms and independent removable snap pins for coupling and supporting to railings, walls or other supports, according to the invention;
- Figure 5 shows a schematic three-dimensional zoomed section view of the assembled flowerpot comprising adjustable arms and independent removable snap pins for coupling and supporting to railings, walls or other supports, according to the invention;

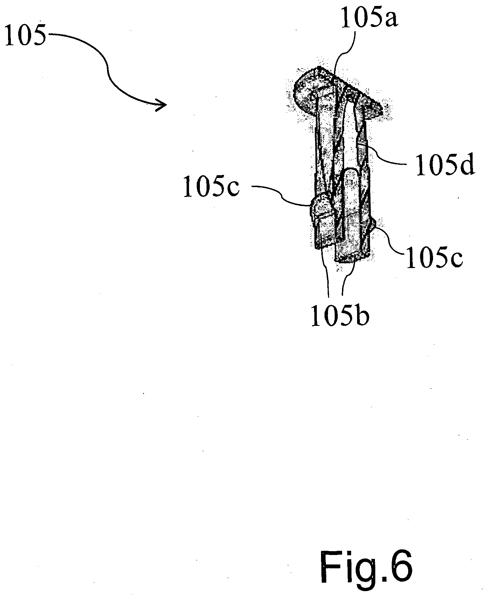

- Figure 6 shows a schematic three-dimensional view of an embodiment of the independent removable snap pins, according to the invention.

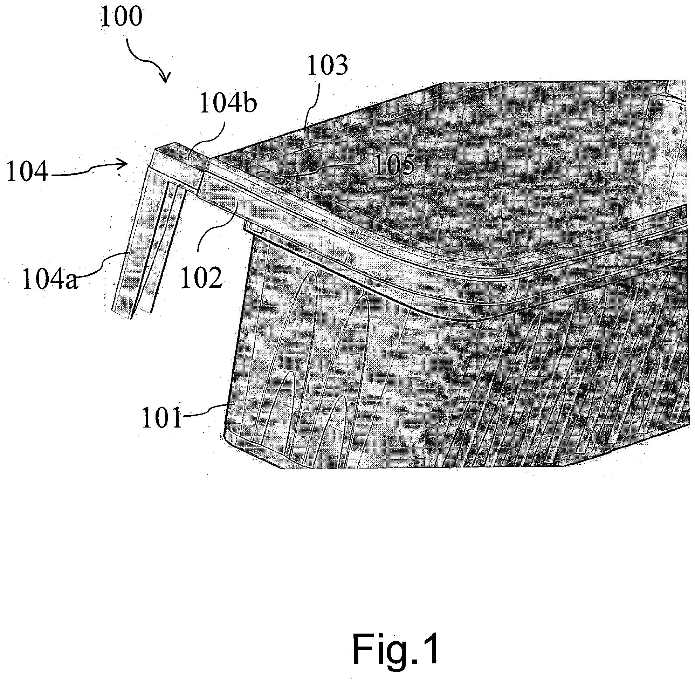

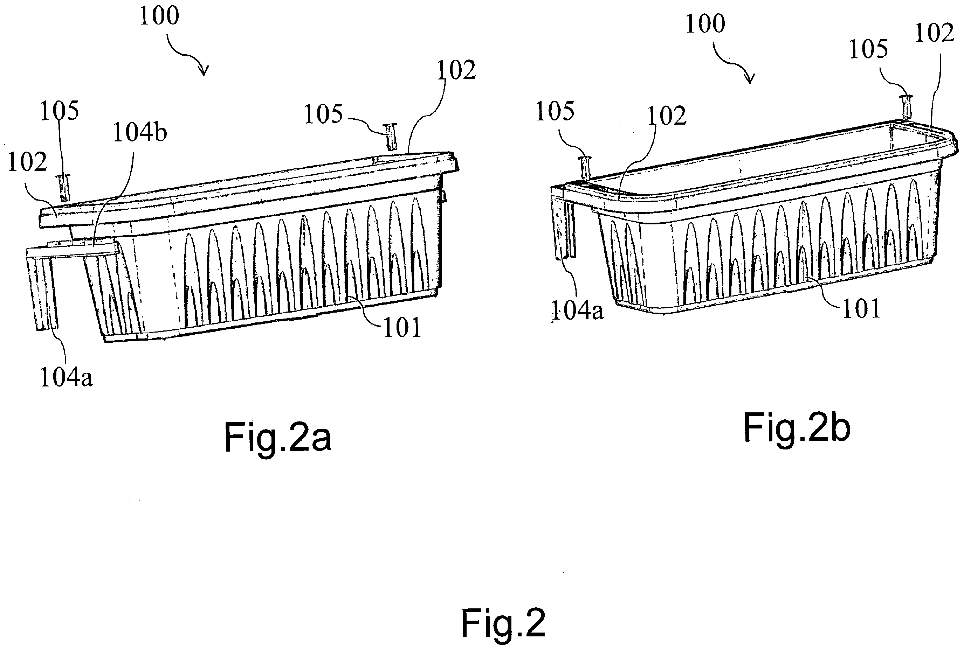

Referring to those figures, and in particular to figures 1 and 2, a flowerpot 100 comprising adjustable arms and independent removable snap pins for coupling and supporting to railings, walls or other supports is shown, according to the invention. In more details, the flowerpot 100 comprises a container 101 having a lateral edge 102 and a rear edge 103. The flowerpot 100 also comprises two lateral arms 104, only one being shown in the figures, for coupling and supporting the container 101 to railings, walls or other supports, not shown in the figures. Each arm 104 comprises a vertical branch 104a for engaging the container 101 to the support not shown and a horizontal branch 104b to be coupled with the lower portion of the lateral edge 102. In particular, the flowerpot 100 is equipped with independently removable snap pins 105 for the stable and safe fixing of the arms 104 to the lateral edge 102 of the container 101.

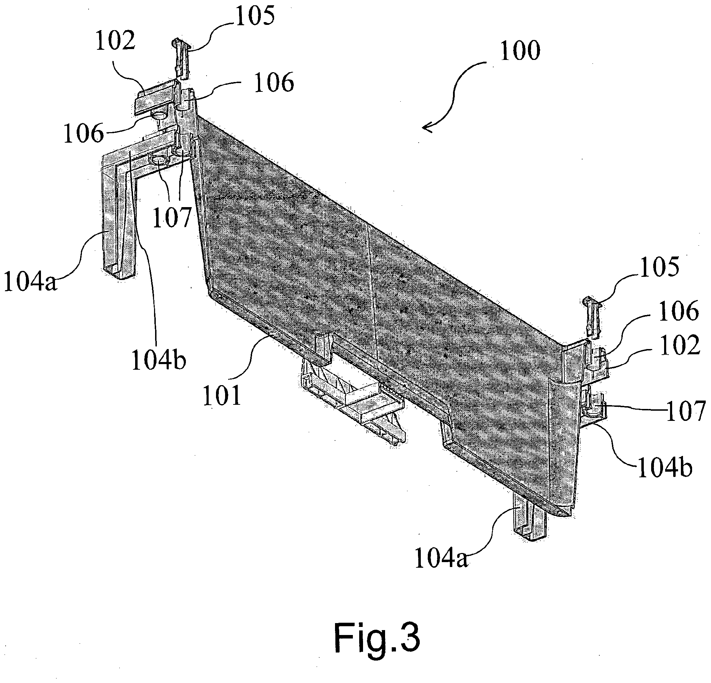

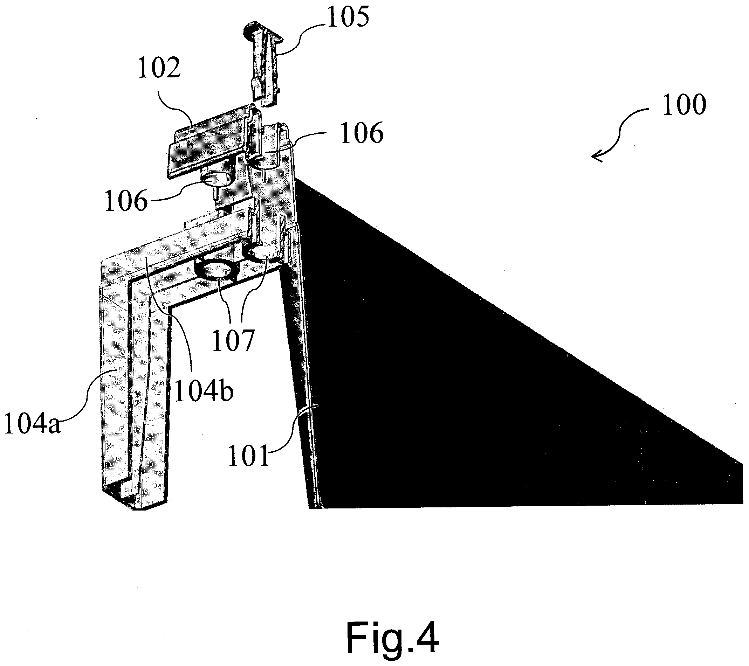

As better shown in the figures 3 and 4, the lateral edge 102 of the container 101 comprises a plurality of trough trenched seats 106 able to be aligned and coupled with correspondent trough trenched seats 107 comprised in the horizontal branch 104b of the arms 104.

More in details, advantageously, according to the invention, the trough trenched seats 106 can enter inside the trough trenched seats 107 so that the container 101 can be coupled to the arms 104.

According to an aspect of the invention, the trough trenched seats 106 and 107 are cylindrical.

Advantageously, according to the invention, a stable and safe fixing of the container 101 coupled to the arms 104 is obtained inserting the removable snap pins 105 inside the trough trenched seats 106.

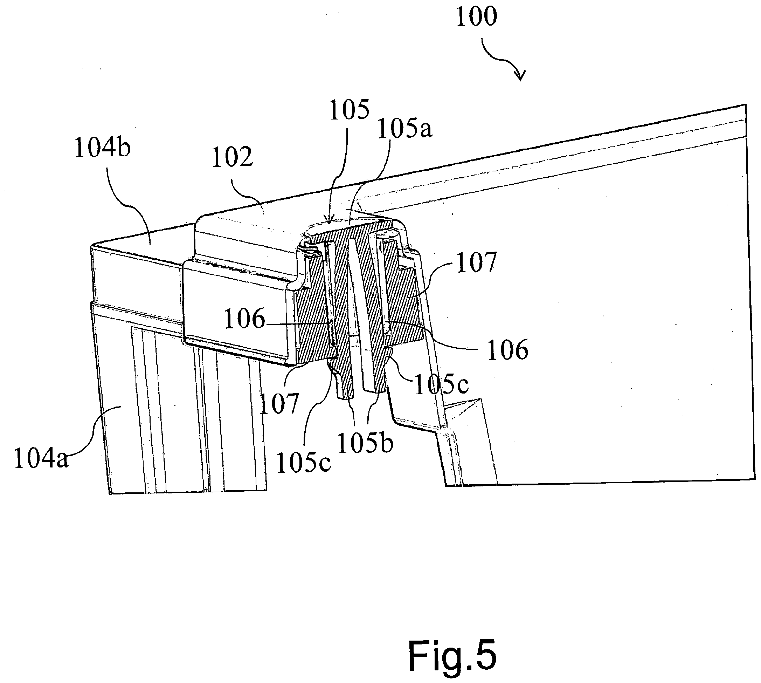

According to an aspect of the invention, as better shown in the figure 5, the removable snap pins 105 comprises an upper head 105a and two lower vertical appendices 105b having bottom lateral protrusions 105c and contoured so that they insert and click into place to fix the lateral edge 102 to the horizontal branch 104a of the arms 104.

According to another aspect of the invention, the removable snap pins 105 are made of plastics.

According to further aspect of the invention, each removable snap pin 105 comprises a plastic plug 105d between two lower vertical appendices 105b. The plug 105d extends from the bottom of the upper head 105a to the bottom lateral protrusions 105c bottom of the vertical appendices 105b and has a length roughly equal to 15 mm.

Advantageously, according to the invention, the arm 104 can be moved at different positions depending on the distance at which the flowerpot 100 has to be fixed on the support. This is possible because all the trough trenched seats 106 are identical each other and all the trough trenched seats 107 are identical each other. Therefore, each trough trenched seat 106 can be coupled with each trough trenched seat 107.

Moreover, advantageously, according to the invention, a single removable snap pins 105 can be inserted into the trough trenched seats 106 and click into place at the end of the trough trenched seats 107 to fix the lateral edge 102 to the horizontal branch 104a of the arms 104.

According to an aspect of the invention, only one removable snap pin 105 is inserted per arm 104.

According to another aspect of the invention, a plurality of removable snap pins 105 is inserted per arm 104.

Advantageously, according to the invention, the flowerpot comprising adjustable arms and independent removable snap pins for coupling and supporting to railings, walls or other supports allows an easy disengagement from the support.

Moreover, with the flowerpot comprising adjustable arms and independent removable snap pins for coupling and supporting to railings, walls or other supports it is possible to easily manage the adjustments of flowerpot position on the support.

At the end, the flowerpot comprising adjustable arms and independent removable snap pins for coupling and supporting to railings, walls or other supports according to the invention is that it is adaptable to a plurality of supports.

It should be clear that other modifications and embodiments carried out to the described flowerpot comprising adjustable arms and independent removable snap pins for coupling and supporting to railings, walls or other supports can be done falling within the scope of the present invention, as defined in the appended claims.

## Claims

1. A flowerpot (100) comprising adjustable arms (104) and independent removable snap pins (105) for safe coupling to railings, walls or other supports comprising a container (101) having a lateral edge (102), the adjustable arms (104) comprising a vertical branch (104a) for engaging the container (101) to the support and a horizontal branch (104b) able to be coupled with a lower portion of the lateral edge (102), **characterized in that** the lateral edge (102) comprises at least two successive trough trenched seats (106) able to be aligned and coupled with at least two successive trough trenched seats (107) comprised in the horizontal branch (104b) via at least one independent removable snap pin (105).

2. A flowerpot (100) according to claim 1, **characterized in that** the at least two successive trough trenched seats (106) are configured for internally fitting to the at least two successive trough trenched seats (107) comprised in the horizontal branch (104b).

3. A flowerpot (100) according to claim 1, **characterized in that** the trough trenched seats (106, 107) are cylindrical.

4. A flowerpot (100) according to claim 1, **characterized in that** the trough trenched seats (106) are identical each other.

5. A flowerpot (100) according to claim 1, **characterized in that** the trough trenched seats (107) are identical each other.

6. A flowerpot (100) according to claim 1, **characterized in that** the removable snap pins (105) comprises an upper head (105a) and two lower vertical appendices (105b) having bottom lateral protrusions (105c) able to click into place at the end of the trough trenched seats (107).

7. A flowerpot (100) according to claim 1, **characterized in that** the removable snap pins (105) are made of plastics.

8. A flowerpot (100) according to claim 6, **characterized in that** the removable snap pin (105) comprises a plastic plug (105d) between the two lower vertical appendices (105b) and extending from the bottom of the upper head (105a) to the bottom lateral protrusions (105c) bottom of the vertical appendices (105b) and has a prefixed length.

## Patentansprüche

1. Blumentopf (100), umfassend verstellbare Arme (104) und unabhängige, entfernbare Einraststifte (105) zur sicheren Verbindung mit Geländern, Wänden oder anderen Trägern, umfassend einen Behälter (101), der einen Seitenrand (102) aufweist, wobei die verstellbaren Arme (104) eine vertikale Verzweigung (104a) zum Eingriff des Behälters (101) in den Träger und eine horizontale Verzweigung (104b) umfassen, die mit einem unteren Abschnitt des Seitenrands (102) verbunden werden kann, **dadurch gekennzeichnet, dass** der Seitenrand (102) mindestens zwei aufeinanderfolgende muldenförmige gefurchte Sitze (106) umfasst, die über mindestens einen unabhängigen, entfernbaren Einraststift (105) mit mindestens zwei aufeinanderfolgenden muldenförmigen gefurchten Sitzen (107), die in der horizontalen Verzweigung (104b) enthalten sind, ausgerichtet und verbunden werden können.

2. Blumentopf (100) nach Anspruch 1, **dadurch gekennzeichnet, dass** die mindestens zwei aufeinanderfolgenden, muldenförmigen gefurchten Sitze (106) für die innere Befestigung an den mindestens zwei aufeinanderfolgenden, in der horizontalen Verzweigung (104b) enthaltenen, muldenförmigen gefurchten Sitzen (104b) ausgestaltet sind.

3. Blumentopf (100) nach Anspruch 1, **dadurch gekennzeichnet, dass** die muldenförmigen gefurchten Sitze (106, 107) zylindrisch sind.

4. Blumentopf (100) nach Anspruch 1, **dadurch gekennzeichnet, dass** die muldenförmigen gefurchten Sitze (106) miteinander identisch sind.

5. Blumentopf (100) nach Anspruch 1, **dadurch gekennzeichnet, dass** die muldenförmigen gefurchten Sitze (107) miteinander identisch sind.

6. Blumentopf (100) nach Anspruch 1, **dadurch gekennzeichnet, dass** der entfernbare Einraststift (105) einen oberen Kopf (105a) und zwei untere vertikale Fortsätze (105b) umfasst, die untere seitliche Vorsprünge (105c) aufweisen, die an dem Ende der muldenförmigen gefurchten Sitze (107) einrasten können.

7. Blumentopf (100) nach Anspruch 1, **dadurch gekennzeichnet, dass** die entfernbaren Einraststifte (105) aus Kunststoff bestehen.

8. Blumentopf (100) nach Anspruch 6, **dadurch gekennzeichnet, dass** der entfernbare Einraststift (105) einen Kunststoffstopfen (105d) zwischen den beiden unteren vertikalen Fortsätzen (105b) umfasst, der sich von der Unterseite des oberen Kopfes (105a) zu den unteren seitlichen Vorsprüngen (105c) unten an den vertikalen Fortsätzen erstreckt und eine vorbestimmte Länge aufweist.

## Revendications

1. Un bac à fleurs (100) composé de bras réglables (104) et de goupilles encastrables amovibles indépendantes (105) pour un raccordement en toute sécurité aux rails, murs ou tout autre support comprenant un conteneur (101) doté d'un bord latéral (102), les bras réglables (104) sont composés d'une branche verticale (104a) pour engager le conteneur (101) sur le support et d'une branche horizontale (104b) pouvant être raccordée à une partie inférieure du bord latéral (102), **caractérisée par le fait que** le bord latéral (102) comprend au moins deux logements creux de bout en bout successifs (106) pouvant être alignés et raccordés avec au moins deux logements creux de bout en bout successifs (107) compris dans la branche horizontale (104b) par au moins une goupille encastrable amovible et indépendante (105).

2. Un bac à fleurs (100) selon la revendication 1, **caractérisé par le fait qu'**au moins deux logements creux de bout en bout successifs (106) sont configurés pour une fixation interne à au moins deux logements creux de bout en bout successifs (107) compris dans la branche horizontale (104b).

3. Un bac à fleurs (100) selon la revendication 1, **caractérisé par le fait que** les logements creux de bout en bout (106, 107) sont cylindriques.

4. Un bac à fleurs (100) selon la revendication 1, **caractérisé par le fait que** les logements creux de bout en bout (106) sont identiques.

5. Un bac à fleurs (100) selon la revendication 1, **caractérisé par le fait que** les logements creux de bout en bout (107) sont identiques.

6. Un bac à fleurs (100) selon la revendication 1, **caractérisé par le fait que** les goupilles encastrables amovibles (105) sont composées d'une tête supérieure (105a) et de deux appendices verticaux inférieurs (105b) avec des protubérances latérales inférieures (105c) pouvant être clipsées à l'extrémité des logements creux de bout en bout (107).

7. Un bac à fleurs (100) selon la revendication 1, **caractérisé par le fait que** les goupilles encastrables amovibles (105) sont en plastique.

8. Un bac à fleurs (100) selon la revendication 6, **caractérisé par le fait que** la goupille encastrable amovible (105) est composée d'une cheville en plastique (105d) située entre les deux appendices verticaux inférieurs (105b) et dépassant du bas de la tête supérieure (105a) vers les protubérances latérales inférieures (105c) en bas des appendices verticaux (105b) et a une longueur préfixée.
